# EUROPEAN PATENT SPECIFICATION

(11) **EP 0 549 094 B1**
(45) Date of publication and mention of the grant of the patent: **24.01.1996**
(21) Application number: 92305374.8
(22) Date of filing: 11.06.1992
(51) Int. Cl.: F16M 1/00, F16B 7/18

(54) **Structural element**
Bauelement
Elément structurel

(30) Priority: 25.12.1991 JP 357796/91
(43) Date of publication of application: 30.06.1993
(73) Proprietor: NIC AUTOTEC CO., LTD., Toyama-shi, Toyama (JP)
(72) Inventor: Nomura, Ryoichi, Toyama-shi, Toyama (JP)
(74) Representative: Harvey, David Gareth

(56) References cited:
- FR-A- 1 550 937
- GB-A- 1 239 236

## Description

This invention relates to a base structure element which is provided in a lateral side with a longitudinal groove and is used as a framework, base or frame of a machine or an apparatus, or an element of a machine or an apparatus.

Conventionally, a framework which becomes a part of a machine or an apparatus has been manufactured by connecting long bar members together by means of connecting members. Further, through holes have been formed in the bar members and required structural members have been fixed to the framework by means of bolts and nuts or the like elements, or alternatively, screw holes have been formed in the bar members and the required structural members have been fixed to the framework by means of screws. Some frameworks have long structural members each formed with a lengthwise extending T-groove having wide portions for receiving nuts, whereby various members have been fixed to the frameworks by means of the nuts and bolts engageable therewith.

According to the conventional techniques, however, it has taken a considerable amount of time and it has been troublesome to assemble a framework. In the case where the through holes or screw holes are formed in the bar members in particular, it has taken a long time to form the through holes and screw holes. In the case where external members are fixed to a framework by means of bolts, there has occurred a problem that nuts have become loosened from the bolts during long service. The loosening can be prevented by using double (lock) nuts. However, double nuts present a problem in that it is difficult to attach them to the bolts or they cannot be tightened so well as single nuts in a T-groove. Double nuts are not convenient fixing means.

This invention was made to overcome the problems existing with conventional base structure elements and is intended to provide a base structure or structural element which has a simple construction, to which external members can easily be fixed and in which bolts are unlikely to loosen during a long service.

GB-A-1,239,236 discloses a device adapted to receive a screw having a predetermined diameter and a helical thread of predetermined pitch, said device comprising a frame having two spaced walls which co-operate to form a slot having a width corresponding to the diameter of the screw, each of the two facing surfaces of the slot having a plurality of parallel ribs providing a thread-like profile corresponding to the thread profile of the screw, and the ribs of the two surfaces being inclined at equal angles in opposite directions relative to a transverse plane normal to the longitudinal plane of symmetry of the slot, whereby the screw may be screwed into the slot along an axis normal to said transverse plane with the helical thread on the screw in mating engagement with the thread-like profiles on the facing surfaces of the slot.

The present invention is as claimed in the claims.

This invention will be explained in more detail by way of example only in the following detailed description with reference to the accompanying drawings in which:
Fig. 1 is a perspective view of a part of a base structure element according to the first embodiment of this invention;
Fig. 2 is a front view of the base structure element according to the first embodiment;
Fig. 3 is a longitudinal cross-sectional view of a part of the base structure element according to the first embodiment, in a state in use;
Fig. 4 is a longitudinal cross-sectional view of the base structure element according to the first embodiment, in another state in use; and
Fig. 5 is a longitudinal cross-sectional view of a part of a base structure element according to the second embodiment of this invention.

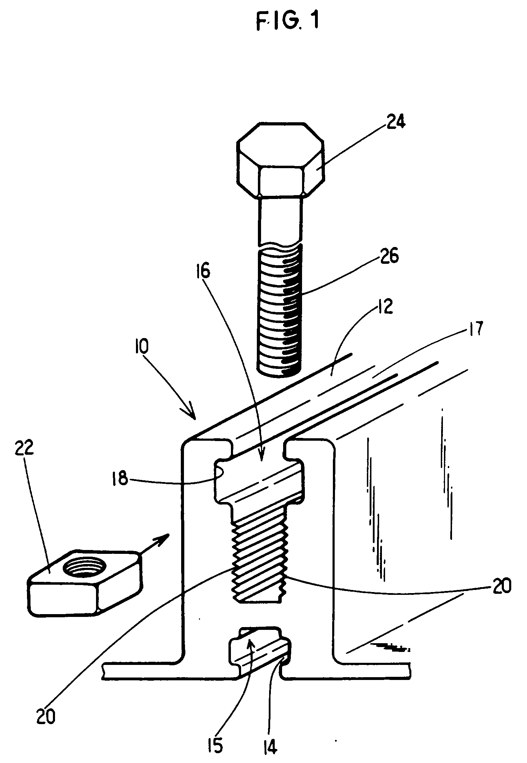

In Figs. 1 to 4 is shown a base structure element 10 according to the first embodiment of this invention. The base structure element 10 comprises an elongated member extruded e.g. from aluminum material and having the same cross section throughout the length of the extruded member. At the central part of the U-shaped bottom of the base structure element 10 are formed flange portions 12 extending lengthwise of the base structure element 10. In the portion of the base structure element 10 which is outside of the bottom is formed a T-groove 15 having a wide portion 14 into which nuts are slidably insertable lengthwise.

A lengthwise extending T-groove 16 is formed in the base structure element 10 such that the groove 16 extends from the upper end portions of the flange portions 12 to the bottoms thereof. At the opening 17 of the T-groove 16 is formed a wide portion 18 which is wider than the opening 17 and into which nuts 22 are slidably insertable lengthwise. On both sides covering the range from the bottom of the T-groove 16 to the vicinity of the wide portion 18 are formed a plurality of triangular ridges 20 arranged such that the ridges 20 on each side extend lengthwise of the T-groove 16 and are provided in parallel to each other at a pitch of the predetermined bolts 24 and the ridges 20 of one of both sides are displaced by half the pitch of the bolt 24. The distance between the centers of the heights of the triangular ridges 20 on both sides are rendered slightly smaller than the effective diameter of the bolt 24 in such a way that the threaded portion of the bolt 24 is engageable with the ridges 20. As the bolt 24 is screwed into the space defined between the ridges 20, both sides of the threaded portion 26 of the bolt 24 are partially bit into the ridges 20 on the both sides of the T-groove 16, whereby the bolt 24 is firmly held by the ridges 20.

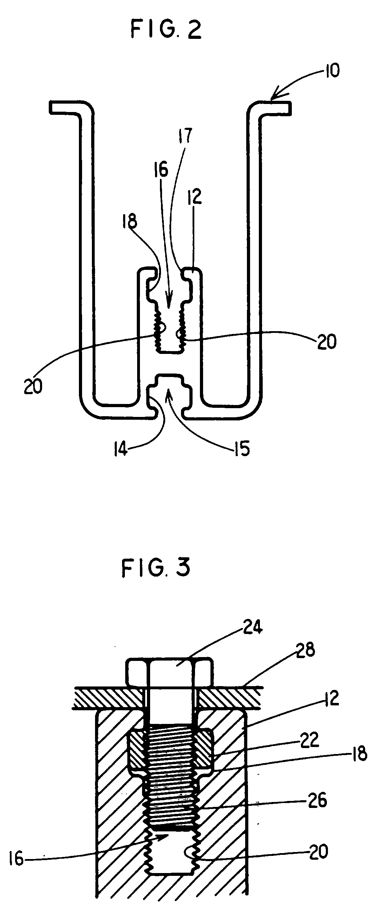

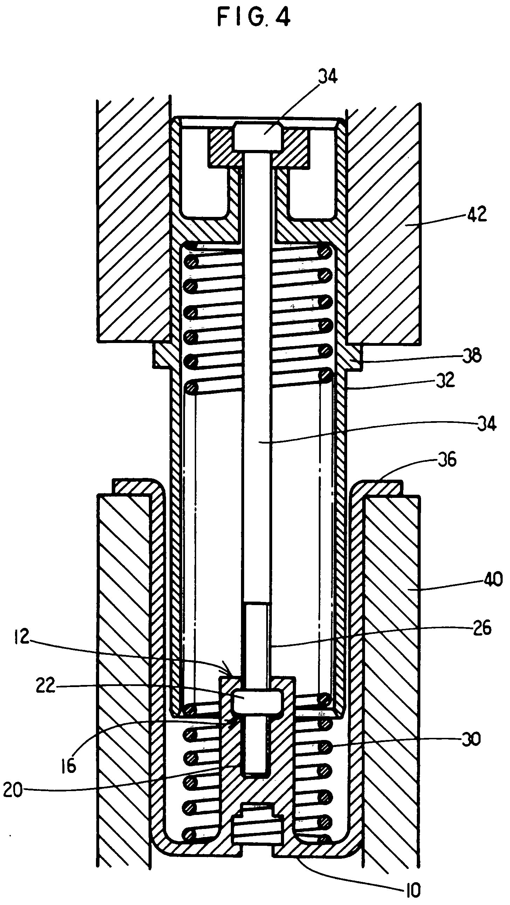

Use of the base structure element 10 according to the first embodiment of this invention will be explained with reference to Figs. 3 and 4.

An external member 28 is located at the portion of an elongated base structure element 10 to which the member 28 is to be fixed to the structure 10 and is fixed to the base structure element 10 by engaging bolts 24 with nuts 22 inserted into the wide portion 18. Each bolt 24 is inserted into the corresponding fixing hole formed in the external member 28 such that the bolt 24 is screw-threadingly engaged with the corresponding nut 22; the bolt is turned so as to be engaged with the ridges 20. The external member 28 is not only firmly held on the flanges 12 by means of the heads of the bolts 24 and the nuts 22, but also fixed to the base structure element 10 by the threaded portion 26 of the bolt biting into the ridges 20.

Fig. 4 shows another application of the base structure element 10 of the first embodiment. The base structure element 10 is cut short. A coil spring 30 is formed so as to be fitted on the outer surface of the flanges 12. A bolt 34 can be inserted into a spring holder 32 from the upper end thereof and can permit the threaded portion 26 of the bolt 34 to be threadably engaged with the ridges 20. The coil spring 30 is held between the bottom of the base structure element 10 and the spring holder 32 in a compressed state and urged by means of both the engaging portion 36 of the base structure element 34 and the engaging portion 38 of the spring holder 32 in the direction in which external members 40 and 42 are separated from each other.

With the base structure element according to the embodiment as shown in Fig. 4, the fixing of various external members to the base structure element allows the threaded portions of the bolts to bite into the ridges and the threaded portions to be fixedly engaged therewith. This prevents the bolts from being loosened due to vibration and/or long usage. When spring biasing force is always applied to the nuts 22, particularly as shown in Fig. 4, the bolts 34 are likely to loosen. Since, however, the threaded portions 26 of the bolts 34 bite into the ridges 20, the bolts 34 will not loosen, and thus the biasing force of the cuil spring 32 is not reduced.

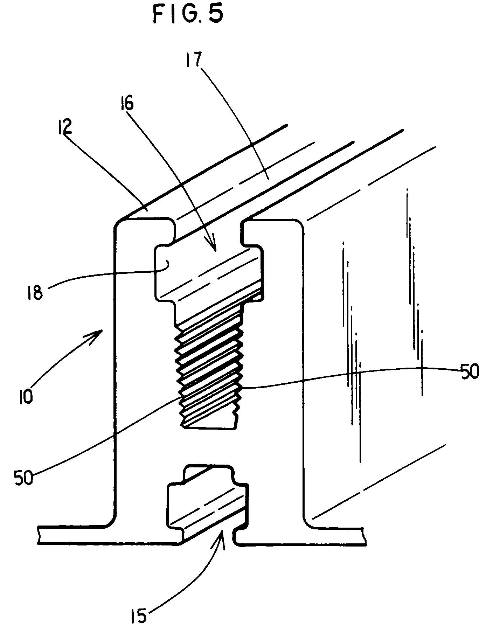

The second embodiment of this invention will be explained with reference to Fig. 5. Elements of the second embodiment that are the same or similar to elements of the first embodiment are shown by the same reference numerals, and a detailed description thereof is omitted. The height of the ridges 50 in the T-groove 16 of the base structure element 10 is gradually decreased toward the bottom of the T-groove 16 and the distance between the opposed ridges 50 becomes gradually smaller toward the bottom of the T-groove 16.

Due to the gradually reducing distance between the opposed ridges 50, the threaded portions of the bolts will more strongly bite into the ridges as the Dolts are screwed home into the space between the ridges, whereby the bolts will be firmly held in the T-groove.

This invention is not limited to the above-mentioned embodiments. The cross section of the base structure element is selected suitably and it may be of an elongated regular parallelepiped or of a pillar. The shape of the ridges may be tooth-shaped, sinusoidal or of any other shape, beside a triangular shape.

With the base structure element according to this invention, the threaded portions of bolts bite into the ridges so as to be securely fixed thereto, so that external members can be fixed to the base structure element in such a manner that the bolts will not be likely to loosen. If light external members are to be fixed to the base structure element or external members are merely held on the base structure element, these external members can be fixed to the base structure element only by bolts without using nuts, thereby reducing time and cost. If portions of the ridges, with which bolts are engaged, happen to be broken by accidental forces, the threaded portions of the bolts can be reset to bite into adjacent portions of the ridges slightly displaced from the broken portions and thus be fixedlyengaged therewith.

## Claims

1. A structural element (10) adapted to receive fastening bolts (24) and nuts (22) at user-selected locations, the structural element (10) having an elongated channel (16), with opposed sides furnished with ridges (20) extending lengthwise of the channel for screw-threading engagement by the threads of a bolt (24) inserted into the channel (16) at a user-selected location, characterised in that the structural element (10) has an elongated lipped opening (17) between the channel (16) and a surface of the structural element, the channel (16) is of T-shaped section (16) with a wide transverse portion (18) inwardly of the lipped opening (17) for captive, non-rotative reception of a nut (22) and with a narrow portion extending inwardly away from the wide portion (18), the narrow portion being furnished with said ridges.

2. A structural element (10) according to claim 1, for use with bolts (24) of a predetermined size and thread, wherein the opposed ridges (20) are configured (i.e. sized and/or spaced) such as to provide an interference fit with the bolts (24).

3. A structural element (10) according to claim 1 or claim 2, wherein the opposed ridged sides of the narrow portion converge toward one another away from the wide portion (18), such as to provide an increasingly greater interference fit with a bolt (24) as it is screw threaded further and further into the channel (16).

4. A structural element (10) according to claim 3 in which the height of the ridges (20) decreases as the opposed sides of the narrow portion converge.

5. A structural element (10) as claimed in any preceding claim in which the ridges (20) formed on each of the opposed sides are displaced by a half of said pitch from the corresponding ridges (20) on the other of said sides.

## Patentansprüche

1. Bauelement (10), das so ausgelegt ist, daß es Befestigungsschrauben (24) und Muttern (22) an vom Benutzer ausgewählten, Stellen aufnehmen kann, wobei das Bauelement (10) einen langgestreckten Kanal (16) aufweist, dessen gegenüberliegende Seiten mit Rillen (20) versehen sind, die sich in Längsrichtung des Kanals erstrecken, zum Schraubgewindeeingriff mit dem Gewinde einer Schraube (24), die in den Kanal (16) an einer von dem Benutzer ausgewählten Stelle eingeschoben ist,
dadurch gekennzeichnet, daß das Bauelement (10) zwischen dem Kanal (16) und einer Oberfläche des Bauelements eine zwischen Lippen ausgebildete Öffnung (17) aufweist, der Kanal (16) einen T-förmigen Querschnitt (16) aufweist mit einem breiten transversalen Abschnitt (18) innerhalb der zwischen Lippen ausgebildeten Öffnung (17) für eine einschließende, nichtdrehfähige Aufnahme einer Mutter (22) und mit einem schmalen Abschnitt, der sich innen von dem breiten Abschnitt (18) weg erstreckt, wobei der schmale Abschnitt mit den besagten Rillen versehen ist.

2. Bauelement (10) nach Anspruch 1 zur Verwendung mit Schrauben (24) mit vorherbestimmter Größe und vorherbestimmtem Gewinde, bei dem die gegenüberliegenden Rillen (20) so ausgestaltet (d.h. bezüglich Abmessungen und/oder Abständen) sind, daß sie eine Presspassung mit den Schrauben (24) liefern.

3. Bauelement (10) nach Anspruch 1 oder Anspruch 2, bei dem die gegenüberliegenden mit Rillen versehenen Seiten des schmalen Abschnitts in Richtung aufeinander zu weg von dem breiten Abschnitt (18) derart konvergieren, daß sie eine anwachsend stärkere Presspassung mit einer Schraube (24) bilden, wenn diese weiter eingeschraubt und tiefer in den Kanal (16) eingeschraubt wird.

4. Bauelement (10) nach Anspruch 3, bei dem die Höhe der Rillen (20) abnimmt, wie die gegenüberliegenden Seiten des schmalen Abschnitts konvergieren.

5. Bauelement (10) nach einem der vorhergehenden Ansprüche, bei dem die auf jeder der gegenüberliegenden Seiten ausgebildeten Rillen (20) jeweils um eine halbe Gewindehöhe gegen die entsprechenden Rillen (20) auf der anderen Seite verschoben sind.

## Revendications

1. Elément structurel (10) adapté pour loger des boulons de serrage (24) et des écrous (22) en des emplacements choisis par un utilisateur, l'élément structurel (10) possédant un passage (16) allongé, ayant des côtés opposés munis de stries (20) s'étendant sur la longueur du passage et destinées à être mises en prise par filetage par les filets du boulon (24) inséré à l'intérieur du passage (16) en un emplacement choisi par l'utilisateur, caractérisé en ce que l'élément structurel (10) possède une ouverture (17) allongée à bec placée entre le passage (16) et une surface de l'élément structurel, le passage (16) est de section (16) conformée en T et possède un tronçon (18) transversal large orienté vers l'intérieur de l'ouverture (17) à bec de manière à loger sans possibilité de rotation et de manière captive un écrou (22), et ledit passage possède un tronçon étroit qui s'étend vers l'intérieur en s'écartant du tronçon (18) large, le tronçon étroit étant muni desdites stries.

2. Elément structurel (10) selon la revendication 1, destiné à être utilisé avec des boulons (24) d'une taille et d'un filetage prédéterminés, dans lequel les stries opposées (20) sont configurées (c'est-à-dire dimensionnées et/ou espacées) afin de créer un ajustement serré avec les boulons (24).

3. Elément structurel (10) selon la revendication 1 ou 2, dans lequel les côtés striés opposés du tronçon étroit convergent l'un vers l'autre en s'écartant du tronçon (18) large, afin de créer un ajustement serré d'autant meilleur avec un boulon (24) que celui-ci est vissé plus avant à l'intérieur du passage (16).

4. Elément structurel (10) selon la revendication 3, dans lequel la hauteur des stries (20) décroît au fur et à mesure que les côtés opposés du tronçon étroit convergent.

5. Elément structurel (10) selon l'une quelconque des revendications précédentes, dans lequel les stries (20) formées sur chacun des côtés opposés sont décalées d'une moitié de pas à partir des stries correspondantes (20) situées sur l'autre desdits côtés.
